Europäisches Patentamt

European Patent Office

Office européen des brevets

(11) Publication number: **0 292 133 B1**

## EUROPEAN PATENT SPECIFICATION

(45) Date of publication of patent specification: **30.12.92**

(21) Application number: **88303902.6**

(22) Date of filing: **29.04.88**

(51) Int. Cl.⁵: **F24D 19/10**, G05D 23/20, F24H 9/20

(54) **Control of a boiler.**

(30) Priority: **05.05.87 GB 8710630**

(43) Date of publication of application:
**23.11.88 Bulletin 88/47**

(45) Publication of the grant of the patent:
**30.12.92 Bulletin 92/53**

(84) Designated Contracting States:
**BE DE FR GB IT NL**

(56) References cited:
**GB-A- 2 176 275**
**LU-A- 49 861**

**Taschenbuch für Heizung und Klimatechnik, 63 Aufgabe, Oldenbourg Verlag pp 650-653.**

(73) Proprietor: **British Gas Corporation Rivermill House 152 Grosvenor Road London SW1V 3JL(GB)**

(72) Inventor: **Sutton, David Michael 60 Frimley Road Camberley Surrey GU15 3EG(GB)**
Inventor: **Ovenden, Neil Andrew Renolds Place Rays Hill Horton Kirby Dartford DA4 9DB(GB)**

(74) Representative: **Morgan, David James British Gas plc Patents, Licensing & Commercial Dev. 326 High Holborn London WC1V 7PT(GB)**

EP 0 292 133 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

The present invention relates to the control of a boiler particularly a condensing type gas boiler while there is a demand for space heating within a building.

In "Taschenbuch für Heizung and Klimatechnik" 63 Ausgabe, R. Oldenbourg Verlag pp 650-653 there is described a method for controlling a boiler while there is a demand for space heating within a building, the method comprising causing the boiler to fire when the fluid temperature in the boiler is lower than a first lower value and to cease firing when the temperature is higher than a second higher value, both the first lower value and the second higher value being dependent upon the prevailing air temperature outside the building.

According to one aspect of the present invention we provide a method for controlling a boiler while there is a demand for space heating within a building, the method comprising causing the boiler to fire for at least a preset minimum period when the fluid temperature TF in the boiler is lower than a first lower value TL and to cease firing when the preset period has expired and TF is higher than a second higher value TH, TL and TH being dependent upon the prevailing temperature TA outside the building, the boiler also being caused to cease firing during the preset period if TF rises above a third maximum temperature value TM which is greater than TH.

According to another aspect of the present invention we provide apparatus for controlling a boiler while there is a demand for space heating within a building, the apparatus comprising a first sensor for sensing the air temperature TA outside the building, a second sensor for sensing the fluid temperature TF in the boiler and computer means responsive to the sensors for determining the values of a first lower temperature TL and a second higher temperature TH the values of TL and TH being dependent on TA, causing the boiler to fire for at least a preset minimum period when TF is lower than TL and to cease firing when the preset period has expired and TF is greater than TH, the computer means also causing the boiler to cease firing during the preset period if TF rises above a third maximum temperature value TM which is greater than TH.

An embodiment of the invention will now be particularly described with reference to the drawings in which :-

Figure 1 is a schematic representation of an apparatus suitable for controlling a gas fired condensing type boiler, and

Figure 2 is a flow sheet of the sequence of operations performed by the computer in the firing of the boiler.

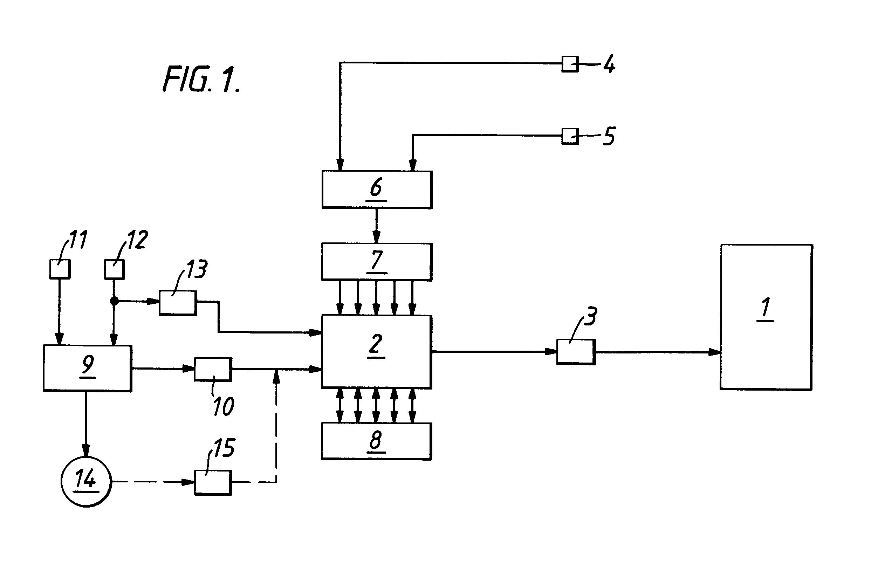

Referring to Figure 1, the boiler 1 may be a conventional gas fired boiler of the condensing type. A controller in the form of a computer 2 controls the firing of the boiler 1 via a relay 3. Sensors 4 and 5 respectively sense the air temperature outside the building in which the boiler 1 is situated and the temperature of the water at the boiler outlet and supply input signals to the computer 2 by way of a multiplexer 6 and an analogue/digital converter 7. The computer has a memory 8 in which are stored values $\Delta T$ corresponding to the sensed outside air temperature TA. $\Delta T$ represents the difference between the normal maximum expected flow water temperature at the lowest outdoor air temperature for which the system is designed and the lower flow water temperature TF* which would suffice to maintain the desired room temperature at the actual sensed outdoor air temperature TA while promoting increased condensation of the flue gas in a gas type condensing boiler.

The Table shows some typical values of $\Delta T$ for a system in which the minimum outdoor air design temperature is -1°C, the maximum expected flow water temperature is 80°C at this temperature, the temperature drop across the heat emitter assembly e.g. a radiator is 20°C and the desired room temperature is 22°C.

TABLE

| Outdoor Air Temperature °C | Ideal Flow Temp TF* °C | Ideal Return Temp TR* °C | ΔT °C |
|---|---|---|---|
| - 1 | 80 | 60 | 0 |
| + 3 | 71.9 | 55.3 | 8.1 |
| + 6 | 65.5 | 51.6 | 14.5 |
| + 9 | 58.9 | 47.6 | 21.1 |
| + 12 | 52 | 43.4 | 28 |
| + 15 | 44.7 | 38.6 | 35.3 |
| + 18 | 36.7 | 33.2 | 43.3 |

It will be appreciated that the Table shows only a small selection of the values of ΔT. In addition the values of T would differ from those shown where the outdoor air design minimum temperature and/or the maximum expected flow water temperature and/or the temperature drop across the heat emitter assembly and/or the desired room temperature is different to those shown. ΔT will also vary for different types of heat emitters. The computer calculates TF* from the value of T relevant to the particular value of TA and the design parameters described and stores this value and then computes the higher value TH of the flow water temperature at which the boiler is to be switched off. The computer also computes the ideal return temperature TR* corresponding to TF* and also stores this value. Using the stored value of TR* the computer then calculates the lower value TL of the flow water temperature at which the boiler is to be switched on.

The firing of the boiler 1 is also controlled by means of a conventional system controller 9 via a relay 10 connected to the computer 2. The system controller 9 is activated by a room thermostat 11 and a cylinder thermostat 12 which latter also directly controls firing of the boiler 1 via a relay 13 connected to the boiler 1. The system controller 9 also controls the operation of the water pump 14. The controller 9 can alternatively control the firing of the boiler 1 via an electrohydraulic link from the pump 14 and a pressure switch 15.

The boiler 1 is not allowed to fire until there is a demand for heat detected by the room thermostat 11 or the hot water thermostat 12. If the demand for heat from either of the thermostats 11 or 12 ceases, the boiler 1 ceases firing immediately. The link from the hot water thermostat 12 via the relay 13 to the computer 2 ensures that the required flow temperature TF* is not depressed from 80°C for the duration of a heat demand for hot water.

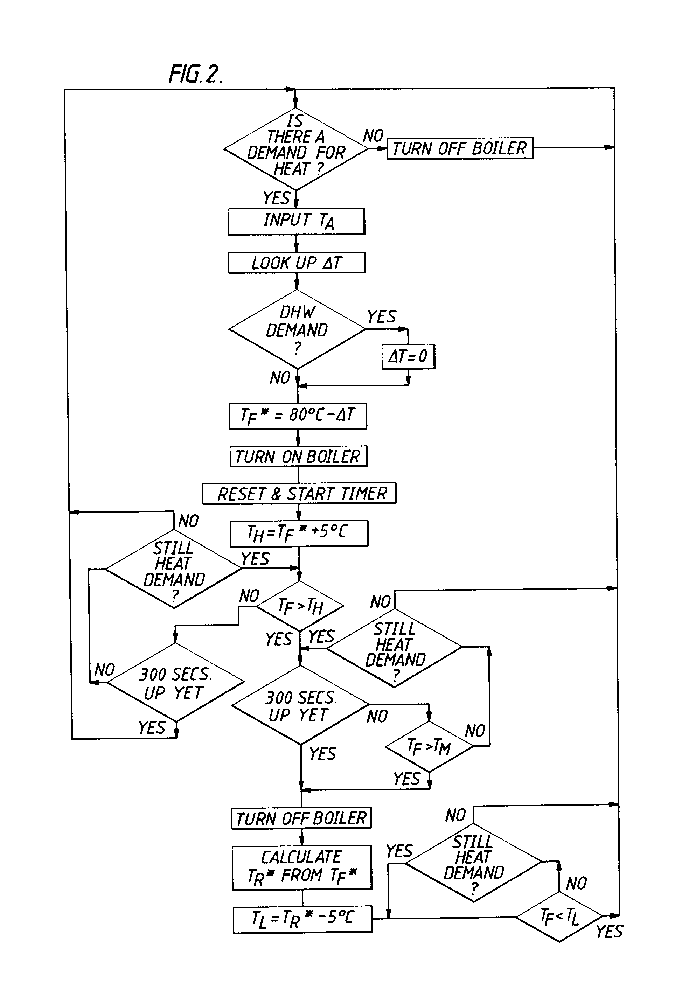

Referring to Figure 2, most of this we believe self explanatory but we would note the following points :-

(i) If there is a demand for domestic hot water (DHW) the cylinder thermostat closes and DHW takes preference over space heating and ΔT = 0.

(ii) When the boiler fires (i.e. turns on) as a result either of the room or cylinder thermostats being closed, a timer is started which under normal circumstance runs in this example for 300 seconds. However, even if 300 seconds have not elapsed, if TF is now greater than TH and a maximum safety value TM (e.g. 85°C) the boiler will be turned off.

(iii) In this example the value of TH is caused to exceed TF* by 5°C while the value of TL is caused to be lower than TR* by 5°C.

**Claims**

1. A method for controlling a boiler while there is a demand for space heating within a building, the method comprising causing the boiler to fire for at least a preset minimum period when the fluid temperature TF in the boiler is lower than a first lower value TL and to cease firing when the preset period has expired and TF is higher than a second higher value TH, TL and TH being dependent upon the prevailing air temperature TA outside the building, characterised in that the boiler is also caused to cease firing during the preset period if TF rises above a third maximum temperature value TM which is greater than TH.

2. Apparatus for controlling a boiler while there is a demand for space heating within a building, the apparatus comprising a first sensor for sensing the air temperature TA outside the building, a second sensor for sensing the fluid temperature TF in the boiler and computer means responsive to the sensors for determining the values of a first lower temperature TL and a second higher temperature TH, the values of TL and TH being dependent upon TA, and for causing the boiler to fire for at least a preset minimum period when TF is lower than TL and to cease firing when the preset period has expired and TF is greater than TH, characterised in that the computer means also causes the boiler to cease firing during the preset period if TF rises above a third maximum temperature value TM which is greater than TH.

## Patentansprüche

1. Verfahren zur Regelung eines Heizkessels während eines Heizbedarfs des Raumes in einem Gebäude, mit den Verfahrensmerkmalen, daß der Heizkessel veranlaßt wird, für wenigstens eine vorbestimmte Mindestperiode aufzuheizen, wenn die Strömungsmitteltemperatur TF im Heizkessel geringer ist als ein erster niedrigerer Wert TL, und mit Aufheizen aufzuhören, wenn die vorbestimmte Periode abgelaufen ist und TF höher ist als ein zweiter höherer Wert TH, wobei TL und TH von der vorherrschenden Lufttemperatur TA außerhalb des Gebäudes abhängig sind, dadurch gekennzeichnet, daß der Heizkessel außerdem veranlaßt wird, die Aufheizung während der vorbestimmten Periode zu beenden, wenn TF über einen dritten maximalen Temperaturwert TM ansteigt, der größer ist als TH.

2. Vorrichtung zur Regelung eines Heizkessels während eines Heizbedarfs des Raumes in einem Gebäude, mit einem ersten Sensor zur Abtastung der Lufttemperatur TA außerhalb des Gebäudes, einem zweiten Sensor zur Abtastung der Strömungsmitteltemperatur TF im Heizkessel und einem Computer, der auf die Sensoren anspricht, um die Werte einer ersten niedrigeren Temperatur TL und einer zweiten höheren Temperatur TH zu bestimmen, wobei die Werte TL und TH von TA abhängig sind, und den Heizkessel zu veranlassen für wenigstens eine vorbestimmte Mindestperiode aufzuheizen, wenn TF niedriger ist als TL, und die Aufheizung zu beenden, wenn die vorbestimmte Periode abgelaufen ist und TF größer ist als TH, dadurch gekennzeichnet, daß der Computer außerdem bewirkt, daß der Heizkessel die Aufheizung während der vorbestimmten Periode beendet, wenn TF über einen dritten maximalen Temperaturwert TM ansteigt, der größer ist als TH.

## Revendications

1. Procédé de commande d'une chaudière en présence d'une demande de chauffage dans un bâtiment, le procédé consistant à amener la chaudière à chauffer pendant au moins une période minimale préétablie lorsque la température d'un fluide TF dans la chaudière est inférieure à une première valeur inférieure TL et à arrêter de chauffer lorsque la période préétablie a expiré et que TF est supérieure à une deuxième valeur supérieure TH, TL et TH étant dépendantes de la température de l'air TA régnant à l'extérieur du bâtiment, caractérisé en ce que la chaudière est également amenée à cesser de chauffer pendant la période préétablie si TF s'élève au-dessus d'une troisième valeur maximale de température TM qui est supérieure à TH.

2. Appareil de commande d'une chaudière en présence d'une demande de chauffage dans un bâtiment, l'appareil comportant un premier capteur destiné à capter la température de l'air TA à l'extérieur du bâtiment, un second capteur destiné à capter la température d'un fluide TF dans la chaudière et un moyen de calcul qui, en réponse aux capteurs, est destiné à déterminer les valeurs d'une première température inférieure TL et d'une deuxième température supérieure TH, les valeurs de TL et TH étant dépendantes de TA, et à amener la chaudière à chauffer pendant au moins une période minimale préétablie lorsque TF est inférieure à TL et à cesser de chauffer lorsque la période préétablie a expiré et que TE est supérieure à TH, caractérisé en ce que le moyen de calcul amène aussi la chaudière à cesser de chauffer durant la période préétablie si TF s'élève au-dessus d'une troisième valeur maximale de température TM qui est supérieure à TH.

4

FIG.1.

# FIG.2.